# EUROPÄISCHE PATENTSCHRIFT

(11) **EP 4 314 581 B1**
(45) Veröffentlichungstag und Bekanntmachung des Hinweises auf die Patenterteilung: **05.08.2026**
(21) Anmeldenummer: 22711469.1
(22) Anmeldetag: 10.03.2022
(51) Int. Cl.: F16C 33/78, B60B 27/00, B60B 27/02, B60C 23/00, F16C 41/00, F16J 15/00, F16J 15/16, F16J 15/3228, F16J 15/3232, F16C 19/38, F16C 19/54

(54) **RADLAGER ZUR LAGERUNG EINES KRAFTFAHRZEUGREIFENS EINES KRAFTFAHRZEUGS**
WHEEL BEARING FOR MOUNTING A MOTOR VEHICLE TYRE OF A MOTOR VEHICLE
ROULEMENT DE ROUE POUR LE MONTAGE D'UN PNEUMATIQUE DE VÉHICULE À MOTEUR D'UN VÉHICULE À MOTEUR

(30) Priorität: 26.03.2021 DE 102021107653
(43) Veröffentlichungstag der Anmeldung: 07.02.2024
(73) Patentinhaber: Schaeffler Technologies AG & Co. KG, 91074 Herzogenaurach (DE)
(72) Erfinder: SCHÄFER, Marc-André, 97532 Üchtelhausen (DE); WASSMUTH, Sebastian, 97424 Schweinfurt (DE)
(74) Vertreter: Schaeffler Technologies
(86) Internationale Anmeldenummer: PCT/DE2022/100194
(87) Internationale Veröffentlichungsnummer: WO 2022/199751

(56) Entgegenhaltungen:
- EP-A1- 0 410 723
- WO-A1-2014/044259
- WO-A1-2017/152996
- US-A1- 2015 231 937

## Beschreibung

Die Erfindung betrifft ein Radlager zur Lagerung eines Kraftfahrzeugreifens eines Kraftfahrzeugs, mit dessen Hilfe in dem Radlager eine Drehdurchführung ausgebildet werden kann, um in radialer Richtung ein Druckfluid durch das Radlager hindurchzuleiten, insbesondere um einen Reifendruck eines Reifens des Kraftfahrzeugs einzustellen.

Die Reifen von Kraftfahrzeugen haben je nach Untergrund und nach Beladung einen unterschiedlichen, optimalen Reifendruck. Beispielsweise bei losem Untergrund, Sand, Matsch oder ähnliches wird eine möglichst gute Traktion benötigt, die mit einem Reifen mit einem sehr geringen Reifendruck erreicht werden kann. Auf einem ebenen Untergrund wie beispielsweise einer Landstraße ist auch bei einem höheren Reifendruck eine ausreichende Traktion erreicht, wobei ein Reifen mit einem hohen Reifendruck zu weniger Reibung und einem geringeren Spritverbrauch führt. Für einen voll beladenen Lastkraftwagen fällt der optimale Reifendruck höher aus als für eine Leerfahrt. Lastkraftwagen, die im Gelände oder auf Baustellen fahren, wie beispielsweise einem Kipper, sind in der Regel entweder vollkommen leer oder komplett beladen unterwegs, so dass insbesondere für solche Lastkraftwagen der Unterschied zwischen den jeweils optimalen Reifendrücken besonders groß ist.

Aus DE 10 2018 100 751 A1 ist ein Radlager zur Lagerung eines Kraftfahrzeugreifens eines Kraftfahrzeugs bekannt, bei dem zwischen zwei Dichteinheiten einer Drehdurchführung eine Druckkammer zum Anpressen von Dichtlippen der Dichteinheiten an einen relativ drehbaren Ring vorgesehen ist, wobei an der von der Druckkammer weg weisenden Axialseite der Dichteinheiten jeweils ein Wälzlager vorgesehen ist, an dem sich die jeweilige Dichteinheit gegebenenfalls über einen an dem relativ drehbaren Ring dichtend anliegenden Staubschutzdeckel axial abstützen kann.

Die Druckschrift WO 2017/152996 A1 offenbart ein Radlager nach dem Oberbegriff des Patentanspruchs 1.

Es besteht ein ständiges Bedürfnis die Lebensdauer einer Drehdurchführung für ein Radlager zu erhöhen.

Es ist die Aufgabe der Erfindung Maßnahmen aufzuzeigen, die eine hohe Lebensdauer für eine Drehdurchführung für ein Radlager zu ermöglichen.

Die Lösung der Aufgabe erfolgt erfindungsgemäß durch ein Radlager mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Eine Ausführungsform betrifft ein Radlager zur Lagerung eines Kraftfahrzeugreifens eines Kraftfahrzeugs, insbesondere Lastkraftfahrzeug, mit einem, insbesondere als Innenlagerring ausgestalteten, ersten Ring, einem, insbesondere als Außenlagerring oder Nabe oder Adapterring ausgestalteten, relativ zum ersten Ring über mindestens ein gefettetes Wälzlager drehbar gelagerten zweiten Ring, einer in radialer Richtung zwischen dem ersten Ring und dem zweiten Ring ausgebildeten Druckkammer zum Durchleiten von Druckluft durch den ersten Ring und den zweiten Ring hindurch und einer in radialer Richtung zwischen dem ersten Ring und dem zweiten Ring und in axialer Richtung zwischen dem gefetteten Wälzlager und der Druckkammer angeordneten Dichteinheit zum Abdichten der Druckkammer gegenüber dem Wälzlager, wobei die Dichteinheit eine die Druckkammer axial zumindest teilweise begrenzende Dichtlippe zur luftdichten Abdichtung der Druckkammer und mindestens eine zu der Dichtlippe verschiedene Fettdichtung zur fettdichten aber luftdurchlässigen Abdichtung eines zwischen dem ersten Ring und dem zweiten Ring ausgebildeten und zum Wälzlager führenden Ringspalts aufweist. Weiterhin ist die Fettdichtung durch den Haltekörper ausgebildet. Die Bauteileanzahl kann dadurch gering gehalten werden. Zudem kann ausgenutzt werden, dass der Haltekörper eine ausreichende Festigkeit zur Ausbildung einer nicht berührenden Dichtung und/oder eine ausreichende Weichheit zur Ausbildung einer berührenden Dichtung aufweisen kann.

Die Dichteinheit weist einen aus einem, insbesondere elastomeren, Kunststoffmaterial herstellten und mit dem ersten Ring oder mit dem zweiten Ring verpressten Haltekörper zur Befestigung der Dichtlippe auf. Die Befestigung und Abdichtung der Dichteinheit mit dem einen Ring kann durch den Haltekörper bereitgestellt werden, während die Abdichtung mit dem relativ drehbaren anderen Ring durch die Dichtlippe bereitgestellt wird. Dadurch können für den Haltekörper und für die Dichtlippe unterschiedliche für den Einsatzzweck jeweils besser dimensionierte Materialen verwendet werden.

Um für die Wälzlager des Radlagers eine hohe Lebensdauer zu erreichen, sind die Wälzlager mit einem Schmierfett geschmiert. Grundsätzlich kann Schmierfett im Bereich der Dichteinheit, insbesondere zwischen der Dichtlippe und dem relativ zu der Dichtlippe drehbaren Ring, die Reibung und damit den Verschleiß reduzieren, so dass eine erhöhte Lebensdauer der Dichteinheit zu erwarten wäre. Jedoch wurde erkannt, dass bei den auftretenden Relativdrehzahlen und dem Anpressdruck so hohe Temperaturen an der Dichtlippe auftreten können, dass sich die Kohlenwasserstoffe im Schmierfett zersetzen und eine karbonisierte Schicht an der Dichtstelle der Dichtlippe erzeugen, die zu einem erhöhten Verschleiß und einer reduzierten Lebensdauer führen können. Durch die zu der Dichtlippe separaten Fettdichtung kann jedoch das Schmierfett der gefetteten Wälzlager zurückgehalten werden und ein Kontakt der Dichtlippe mit dem Schmierfett verhindert werden. Hierbei wird die Erkenntnis ausgenutzt, dass die Fettdichtung nur fettdicht und nicht luftdicht abdichten muss, so dass die Fettdichtung mit einem deutlich geringeren Anpressdruck als die Dichtlippe oder sogar berührungslos ausreichend dicht gegenüber Schmierfett ausgestaltet sein kann. Durch die Fettdichtung begründete Reibungseffekte sind dadurch vernachlässigbar oder sogar ganz vermieden. Zudem kann die Fettdichtung erheblich geringeren Belastungen als die Dichtlippe ausgesetzt sein, so dass die Lebensdauer der Dichteinheit beeinträchtigende Verschleißeffekte nicht zu befürchten sind. Es ist sogar möglich, dass die axialer außerhalb des Wälzlagers vorgesehene Fettdichtung einen Beitrag leisten kann das Schmierfett des Wälzlagers im Wälzlager zurückzuhalten und ein Auslaufen von Schmierfett zu verhindern, so dass die Lebensdauer und die Schmierung des Wälzlagers verbessert sein kann. Durch die zur Dichtlippe separate Fettdichtung kann eine verschleißerhöhende karbonisierte Schicht durch Schmierfett des Wälzlagers vermieden werden, so dass eine hohe Lebensdauer für eine Drehdurchführung für ein Radlager ermöglicht ist.

Es ist möglich, dass an beiden axialen Rändern der Druckkammer jeweils eine, vorzugsweise gleichartig, symmetrisch und/oder identisch ausgestaltete, Dichteinheit vorgesehen ist. Insbesondere sind axial außerhalb zu der Druckkammer an beiden axialen Seiten jeweils ein gefettetes Wälzlager vorgesehen. Die beiden Dichteinheiten und/oder die beiden Wälzlager können vorzugsweise als identische Gleichteile ausgestaltete sein, die spiegelbildlich zueinander verbaut werden können. Die Druckkammer kann in radialer Richtung durch den ersten Ring und den relativ zum ersten Ring drehbaren zweiten Ring und in axialer Richtung durch die beiden Dichteinheiten begrenzt sein. Hierbei kann der erste Ring einen mit der Druckkammer kommunizierenden Einlass zum Anschluss einer Druckquelle und der zweite Ring einen mit der Druckkammer kommunizierenden Auslass zum Anschluss eines Drucknutzraums, insbesondere Reifenschlauch eines Kraftfahrzeugreifens, aufweisen, wodurch eine Drehdurchführung ausgebildet wird, um Druckluft durch die relativ zueinander drehbaren Ringe hindurchzuleiten. Wenn die Druckluft in der Druckkammer den Druck erhöht, kann der sich erhöhende Druck auch an der Dichtlippe angreifen. Vorzugsweise ist vorgesehen, dass die Dichtlippe jedoch nicht eine ausschließlich in einer Radialebene liegende Stirnseite aufweist, sondern dass die Dichtlippe zumindest in einem Teilbereich zu der Radialebene angeschrägt ist. Dadurch führt der an der Dichtlippe abgreifende Druck der Druckkammer auch zu einem in radialer Richtung wirkenden Kraftanteil. Dieser Kraftanteil kann die Dichtlippe, insbesondere eine Dichtkante der Dichtlippe, gegen eine relativ zu der Dichtlippe drehbare Dichtfläche drücken, so dass sich eine von dem Druck in der Druckkammer abhängige Dichtwirkung der Dichtlippe ergibt. Bei einem hohen Druck in der Druckkammer kann die Dichtlippe mit einer höheren Kraft angepresst werden, so dass eine ausreichend hohe Dichtwirkung erreicht wird, um auch bei einem hohen Druck eine Leckage zu vermeiden. Bei einem niedrigen Druck in der Druckkammer ergibt sich eine geringere Dichtwirkung, die immer noch ausreicht eine Leckage von Druckluft zu vermeiden aber aufgrund der geringeren Anpresskraft einem geringeren Verschleiß unterliegt. Durch abrasiven Verschleiß und/oder durch thermische Belastung verursachte Verschleißeffekte können dadurch zumindest reduziert werden. Die Dichteinheiten können bei der Montage leicht zwischen dem ersten Ring und dem zweiten Ring aufgesteckt werden, so dass eine einfache Montage gegeben ist.

Die radiale Anpresskraft der Dichtlippe hängt von dem Druck in der Druckkammer ab. Die Abhängigkeit der Anpresskraft von dem Druck kann beispielsweise eingestellt werden, indem beispielswiese eine Anschrägung der Dichtlippe zu einer Radialebene, eine Größe eines dem Druck der Druckkammer ausgesetzten Flächenbereichs der Dichtlippe, eine Elastizität der Dichtlippe und/oder eine elastische Vorspannung der Dichtlippe gegen die Dichtfläche geeignet gewählt wird. Durch die von dem Druck in der Druckkammer mit einem Anteil in radialer Richtung gegen eine Dichtfläche pressbare Dichtlippe der einfach zwischen die Ringe eingesetzten Dichteinheiten kann eine automatisch an den Druck in der Druckkammer angepasste Dichtwirkung bereitgestellt werden, so dass eine leicht montierbare Drehdurchführung für ein Radlager mit einer geringen Leckage ermöglicht ist.

Der erste Ring kann in axialer Richtung länger ausgestaltet sein, als dies zur Lagerung der Ringe mit Hilfe der Wälzlager erforderlich ist. Dadurch können die Dichteinheiten leicht auf den ersten Ring aufgesteckt sein. Wenn der erste Ring als Innenring des Wälzlagers ausgestaltet ist, sind die Dichteinheiten radial außerhalb zum ersten Ring angeordnet. Wenn der erste Ring als Außenring des Wälzlagers ausgestaltet ist, sind die Dichteinheiten radial innerhalb zum ersten Ring angeordnet. Die Dichteinheiten können in axialer Richtung neben den Wälzkörpern des Radlagers angeordnet sein. Zur Montage des Radlagers können die Dichteinheiten zunächst auf den ersten Ring aufgesteckt werden und danach in eine Nabe, insbesondere Radnabe eines Kraftfahrzeugreifens, eingeführt werden. Die Nabe ist insbesondere aus Gusseisen hergestellt.

Zwischen der Dichtlippe und der Dichtfläche, an der die Dichtlippe luftdicht anliegt, kann im laufenden Betrieb eine Relativdrehung stattfinden, die insbesondere an einer Dichtkante der Dichtlippe zu einem abrasiven Verschleiß führen kann. Durch die Elastizität der Dichtlippe kann der Verschleiß automatisch nachgestellt werden, indem die Dichtlippe von dem Druck in der Druckkammer um das Ausmaß des Verschleißes weiter auf die Dichtfläche zu verformt wird. Eine durch Verschleißeffekte der Dichtlippe verursachte Leckage der Druckluft an einer Dichtkontaktstelle zwischen der Dichtlippe und der Dichtfläche vorbei kann dadurch vermieden werden. Das für die Dichteinheit verwendete mindestens eine Material ist insbesondere hitzebeständig bis zu einer Temperatur von beispielsweise 260°C. Das Material weist insbesondere eine Dehnbarkeit auf, die ausreichend ist, um gegen im Betrieb zu erwartende Stöße unempfindlich zu sein. Beispielsweise weist das jeweilige Material eine Dehnung von 5% bis 10% auf. Der thermische Ausdehnungskoeffizient des jeweiligen Materials entspricht insbesondere im Wesentlichen dem thermischen Ausdehnungskoeffizienten des für die Ringe des Radlagers verwendeten Materials, insbesondere Stahl. Insbesondere ist die Dichtlippe, aus PTFE oder PTFE mit einem Glasfaseranteil oder PTFE mit einem Karbonfaseranteil hergestellt. Die Dichtlippe der Dichteinheit ist dadurch elastisch genug, um von dem Überdruck in der Druckkammer ab die Dichtkontaktfläche angepresst zu werden. Gleichzeitig ist die Dichtlippe der Dichteinheit verschleißfest genug, um über einer langen Lebensdauer hinweg eine ausreichende Dichtwirkung beizubehalten.

Beispielsweise ist ein Innenring des Radlagers mit einer Hohlwelle verbunden, über welche die Druckquelle oder der Drucknutzraum angeschlossen sein kann. Die Hohlwelle kann hierzu beispielsweise eine Querbohrung aufweisen, die insbesondere über eine in der Hohlwelle und/oder in dem Innenring ausgebildete in Umfangsrichtung umlaufende Nut mit der Druckkammer kommunizieren kann. Der Außenring des Radlagers kann mit einer Nabe verbunden sein oder die Nabe ausbilden. Die Nabe kann insbesondere eine Radnabe ausbilden, mit der ein Reifen des Kraftfahrzeugs verbunden sein kann. Die Dichteinheiten können mit einem der Lagerringe des Radlagers über ein Dichtelement, insbesondere eine O-Ring-Dichtung oder ein mit Gummi umspritztes Blechumformteil, drehfest und fluiddicht verbunden sein. Die Dichteinheiten können auch dichtend in einem der Ringe eingepresst sein. Die Dichteinheiten sind insbesondere konzentrisch zu der Drehachse des Radlagers angeordnet. Die Drehachse des Radlagers fällt mit der Drehachse der Dichteinheiten zusammen. Insbesondere ist für die Dichtkontaktstelle zwischen der Dichtlippe und der Dichtfläche keine Schmierung vorgesehen, so dass eine trockene berührende Dichtung ausgebildet ist. Vorzugsweise ist die Dichtfläche drallfrei ausgeführt und/oder weist eine gehonte Oberfläche auf. Insbesondere ist zwischen dem Ringspalt und der Dichtkontaktfläche, an welcher die Dichtlippe anliegt, ein Freistich ausgebildet, so dass die insbesondere oberflächenbearbeitete Dichtkontaktfläche nur in einem für das Anliegen an der Dichtlippe relevanten Axialbereich vorgesehen sein kann. Die Herstellungskosten können dadurch gering gehalten werden.

Das Radlager kann für verschiedene Anwendungen auch außerhalb einer Anwendung als Radlager für einen Reifen eines Kraftfahrzeugs verwendet werden. Für viele Einsatzgebiete ist es ausreichend, wenn der Innendurchmesser eines der Wälzlager des zumindest zweireihigen Radlagers oder einreihigen Radlagers zwischen einschließlich 50 mm und einschließlich 160 mm liegt, wobei insbesondere der Außendurchmesser des Wälzlagers zwischen einschließlich 90 mm und einschließlich 230 mm liegt. Vorzugsweise liegt die axiale Breite des Wälzlagers zwischen einschließlich 81 mm und einschließlich 116 mm. Die radiale Erstreckung des Radlagers ist dadurch groß genug, um die Dichteinheiten aufzunehmen und die Dichteinheiten noch kostengünstig fertigen und montieren zu können. Wenn für die zwei Wälzlager ein gemeinsamer Lagerring verwendet wird, kann eine entsprechend doppelt so große axiale Breite für den für beide Wälzlager vorgesehenen Lagerring vorgesehen sein. Zur leichteren Montage kann der Lagerring eine etwas größer bemessene axiale Breite aufweisen, die beispielsweise zwischen einschließlich 165 mm und einschließlich 250 mm liegt.

Besonders bevorzugt weist die die Dichteinheit einen, insbesondere aus einem Stahl hergestellten, Stützring zur axialen Abtragung eines von der Druckkammer auf die Dichteinheit aufgeprägten Drucks an einen mit dem ersten Ring oder mit dem zweiten Ring verbundenen und den Ringspalt in radialer Richtung begrenzenden Körper, insbesondere Dichtscheibe des Wälzlagers und/oder Stützkörper, auf. Der Körper kann insbesondere als ein Ring mit einer L-förmigen Querschnittsfläche ausgestaltet sein. Der längere Schenkel des Ls kann flächig an einer Axialseite der Dichteinheit beziehungsweise des Stützrings anliegen, um eine Wärmeabfuhr aus der Dichteinheit zu begünstigen. Der Stützring kann der Dichteinheit eine gewisse Stabilität verleihen, so dass auch bei hohen Drucken in der Druckkammer eine zu starke Komprimierung der Dichtlippe und/oder des Haltekörpers vermieden werden kann. Ein Nachlassen der Dichtwirkung der Dichtlippe und/oder des Haltekörpers bei einem hohen Druck kann vermieden werden. Zudem kann der an dem Körper abgestützte Stützring die axiale Lage der Dichteinheit definieren. Der Körper kann eine zwischen dem ersten Ring und dem zweiten Ring ausgebildete Einstecköffnung für die Dichteinheit teilweise schließen und/oder einen Axialanschlag zur Vorgabe der axialen Relativlage der Dichteinheit ausbilden. Hierzu kann der Körper mit dem ersten Ring oder mit dem zweiten Ring bewegungsfest verbunden sein. Insbesondere kann der Körper zu dem zu ihm relativ drehbaren Ring in radialer Richtung beabstandet sein, wodurch der in axialer Richtung zwischen dem Wälzlager und der Dichteinrichtung vorgesehene Ringspalt ausgebildet sein kann. Der Strömungsquerschnitt des Ringspalts kann kein genug ausgebildet sein, dass für das Schmierfett des Wälzlagers bereits einen gewissen Strömungswiderstand ausgebildet ist, so dass an der Fettdichtung entsprechend wenig Schmierfett ankommt. Insbesondere kann der Ringspalt so eng ausgebildet sein, dass allenfalls bei plötzlichen Drehmomentstößen ("Impacts") und/oder plötzlichen Drehzahlwechseln Schmierfett bis an die Fettdichtung heran gedrückt werden kann.

Insbesondere ist die Fettdichtung radial innerhalb des Stützrings ausgebildet. Da der Stützring zum Abtragen der auftretenden Axialkräfte, insbesondere flächig, an dem Körper anliegen soll, braucht der Stützring nicht bis an den relativ zu dem Stützring drehbaren Ring heran geführt zu sein. In dem Radiusbereich, in dem der Ringspalt ausgebildet ist, kann der Stützring sich sowieso nicht an dem Körper abstützen, so dass zwischen dem Stützring und dem relativ zu dem Stützring drehenden Ring ein hinreichend großer Radiusbereich freigehalten werden kann, in dem die Fettdichtung, die vorzugsweise von dem Haltekörper der Dichteinrichtung ausgebildet ist, vorgesehen werden kann. Die Fettdichtung kann dadurch nahezu bauraumneutral vorgesehen werden.

Vorzugsweise weist der Stützring eine flächig an dem Körper anliegende Stützscheibe und eine von dem Körper weg und zu der Dichtlippe hin abgekröpfte Haltescheibe auf, wobei die Haltescheibe eine zu einem Großteil nach radial innen weisende Mantelfläche aufweist. Der Stützring kann beispielsweise vergleichbar zu einer Tellerfeder ausgestaltet sein, wobei der Stützring im Vergleich zu einer elastisch deformierbaren Tellerfeder eine deutlich dickere Materialdicke aufweist, um bei den zu erwartenden Belastungen möglichst formsteif ausgestaltet zu sein. Die Stützscheibe und die Haltescheibe können für die Dichteinheit, insbesondere für den elastomeren Haltekörper, eine ausreichende Formfestigkeit bereitstellen, damit auch bei hohen Drucken in der Druckkammer eine ausreichende Dichtigkeit gegeben ist. Die Haltescheibe kann hierbei auf die Dichtlippe zu von der Stützscheibe abgekröpft verlaufen, so dass auch eine gewisse Grundformgebung für die unbelastete und mit Druck beaufschlagte Dichtlippe vorgegeben werden kann.

Besonders bevorzugt ist vorgesehen, dass die Fettdichtung im Wesentlichen vollständig in einem gemeinsamen Axialbereich mit der Mantelfläche der Haltescheibe ausgebildet ist oder der Haltekörper und/oder die Fettdichtung die Mantelfläche vollständig umgreift und von der Haltescheibe zum Wälzlager hin zumindest teilweise absteht. Die Fettdichtung kann dadurch bauraumsparend radial innerhalb zu dem Stützring ausgebildet sein. Hierbei kann die Fettdichtung gegebenenfalls in den durch die Abkröfpung der Haltescheibe freigegeben Axialbereich zwischen dem Körper und der Haltescheibe hineinragen. Insbesondere ist zwischen dem Ringspalt und einer oberflächenbearbeiteten Dichtkontaktfläche, an welcher die Dichtlippe anliegt, ein Freistich ausgebildet, so dass der für den Freistich vorgesehen Axialbereich für die fettdichte Abdichtung der Fettdichtung genutzt werden kann. Eine axiale Verlängerung der Dichtkontaktfläche in den für die Fettdichtung vorgesehenen Axialbereich kann dadurch vermieden werden. Da die Fettdichtung nicht luftdicht ist, können für die Kontaktfläche der nur fettdichten Fettdichtung entsprechend geringe Anforderungen an die Oberflächengüte und Maßgenauigkeit vorgesehen werden.

In einer besonders bevorzugten Ausführungsform des Radlagers ist vorgesehen, dass die Fettdichtung eine zum Wälzlager hin weisende in radialer Richtung angeschrägte Rückseite zum Ableiten von Schmierfett des Wälzlagers nach radial außen von dem Ringspalt weg aufweist, wobei insbesondere die Fettdichtung teilweise radial innerhalb zu einem Lagerkäfig des Wälzlager angeordnet ist und/oder die Rückseite ausgeformt ist das abgeleitete Schmierfett zur einer den Lagerkäfig zumindest teilweise radial außen umgreifende Axialkonturierung zu leiten. Das aus dem Wälzlager austretende Schmierfett kann von der Rückseite der Fettdichtung von dem Ringspalt und/oder von der relativ drehbare Flächen aufweisenden Dichtstelle der Fettdichtung weggeleitet werden. Das abgeleitete Schmierfett kann zu einem mit einer höheren Drehzahl drehenden Körper abgeleitet werden, so dass das abgeleitete Schmierfett fliehkraftgetrieben nach radial außen von dem Ringspalt und der Dichtstelle weggeschleudert werden kann. Durch eine geeignet ausgeformte Axialkonturierung des Körpers kann das fliehkraftbedingt beschleunigte Schmierfett zum Inneren des Wälzlagers hin umgelenkt werden, so dass das aus dem Wälzlager ausgetretene Schmierfett automatisch wieder zu dem Wälzlager zurückgefördert werden kann. Dadurch kann mit Hilfe der ableitenden Funktion der Rückseite der Fettdichtung die Schmierwirkung des Wälzlagers verbessert werden und ein Austrocknen des Wälzlagers vermieden werden. Die Fettdichtung kann hierbei in einen radial innerhalb zu dem Lagerkäfig des Wälzlagers ausgebildeten Lagerspalt eintauchen, wodurch sich ein bauraumsparender Aufbau ergibt und das über den Lagerspalt austretende Schmierfett des Wälzlagers unmittelbar über die Rückseite des Fettdichtung abgeleitet werden kann.

Besonders bevorzugt ist die Fettdichtung als berührungslose Dichtung ausgestaltet. Da eine luftdichte Dichtung durch die Dichtlippe bereitgestellt wird und die Fettdichtung nur fettdicht sein soll, kann ein geringer Luftspalt zwischen der Fettdichtung und der zugehörigen Kontaktfläche zugelassen werden. Da die Fettdichtung berührungslos dichtet, sind Reibungseffekte und Verschleißeffekte vermieden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Schnittansicht eines Details einer ersten Ausführungsform eines Radlagers,
Fig. 2: eine schematische Schnittansicht eines Details einer zweiten Ausführungsform eines Radlagers,
Fig. 3: eine schematische Schnittansicht eines Details einer nicht erfindungsgemäßen Ausführungsform eines Radlagers,
Fig. 4: eine schematische Schnittansicht eines Details einer weiteren, nicht erfindungsgemäßen Ausführungsform eines Radlagers,
Fig. 5: eine schematische Schnittansicht eines Details einer weiteren, nicht erfindungsgemäßen Ausführungsform eines Radlagers,
Fig. 6: eine schematische Schnittansicht der Fettdichtung des Radlagers aus Fig. 5 und
Fig. 7: eine schematische Schnittansicht eines Details einer weiteren, nicht erfindungsgemäßen Ausführungsform eines Radlagers.

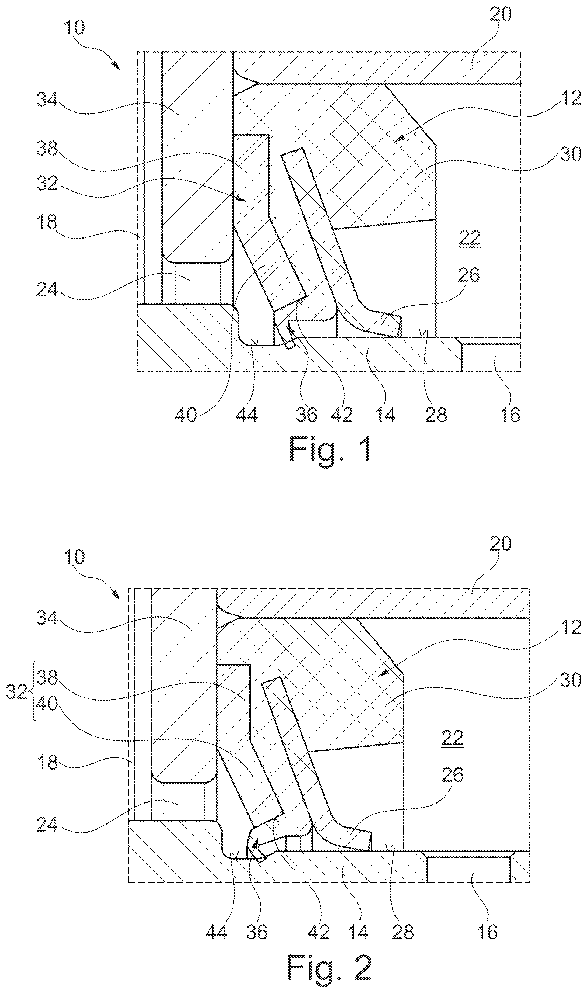

Das in Fig. 1 dargestellte Radlager 10 kann insbesondere für eine Drehdurchführung eines Reifens eines Lastkraftwagens vorgesehen sein, um je nach Betriebssituation einen höheren oder niedrigeren Reifendruck einstellen zu können. Hierzu kann beispielsweise von einer radial innen angeschlossenen Druckquelle ein insbesondere als Druckluft vorliegendes Druckfluid durch das Radlager 10 eines Kraftfahrzeugs hindurch in einen radial äußeren Drucknutzraum leiten, bei dem es sich um einen Reifenschlauch eines Kraftfahrzeugreifens handeln kann, um den für unterschiedliche Randbedingen jeweils unterschiedlichen optimalen Reifendruck einstellen zu können. Das Radlager 10 weist hierzu einen ersten Ring 14 auf, der einen in radialer Richtung verlaufenden Einlass 16 aufweist, über den der von der Druckquelle bereitgestellte Druck angelegt werden kann. Der erste Ring 14 kann hierbei den Innenring des Radlagers 10 ausbilden. Das Radlager 10 ist beispielsweise zweireihig ausgestaltet und kann insbesondere zwei separate Wälzlager 18 aufweisen, die einen gemeinsamen Innenring oder separate Innenringe aufweisen. Die separaten Innenringe können insbesondere an ihren aufeinander zu weisenden Axialseiten jeweils eine Aussparung aufweisen, um gemeinsam den Einlass 16 auszubilden. Es ist auch möglich den Einlass 16 in nur genau einem der ersten Ringe 14 vorzusehen. Das Radlager 10 weist zudem einen zu dem ersten Ring 14 relativ drehbaren zweiten Ring 20 auf, der einen in radialer Richtung verlaufenden Auslass aufweist, um die Druckluft in den Drucknutzraum zu leiten. Der zweite Ring 20 kann hierbei durch einen Außenring des Radlagers 10 oder separat zum Außenring ausgebildet sein. Analog zum ersten Ring 14 kann auch der zweite Ring 20 durch separate Außenringe der einzelnen Wälzlager 18 des mehrreihigen Radlagers 10 ausgebildet sein, wobei insbesondere die separaten Außenringe an ihren aufeinander zu weisenden Axialseiten jeweils eine Aussparung aufweisen können, um gemeinsam den Auslass auszubilden. Der zweite Ring 14 kann auch separat zu den Außenringen des Radlagers 10 ausgestaltet sein und beispielsweise durch eine Nabe für den Reifen ausgebildet sein.

Um den ersten Ring 14 und den zweiten Ring 20 möglichst dicht und verschleißarm gegeneinander abzudichten, weist das Radlager 10 in radialer Richtung zwischen dem ersten Ring 14 und dem zweiten Ring 20 angeordnete Dichteinheiten 12 auf, zwischen denen eine mit dem Einlass 16 und dem Auslass kommunizierende Druckkammer 22 begrenzt wird. Die Dichteinheiten 12 sind insbesondere spiegelbildlich zueinander ausgestaltet, so dass zur vereinfachten Darstellung nur eine Hälfte des Radlagers 10 dargestellt ist. Die Dichteinheiten 12 sind im dargestellten Ausführungsbeispiel mit dem zweiten Ring 20 dichtend verbunden, insbesondere eingepresst. Die jeweilige Dichteinheit 12 weist eine elastische Dichtlippe 26 auf, die durch den Druck in der Druckkammer 22 mit ihrer Dichtkante gegen eine von dem ersten Ring 14 ausgebildete Dichtkontaktfläche 28 gepresst werden kann. Die Dichtlippe 26 kann beispielsweise in einem elastomeren Haltekörper 30 aufgenommen sein, der wiederum durch einen Stützring 32 verstärkt sein kann. Der Stützring 32 kann ein axiales Nachgeben der Dichtlippe 26 blockieren und sich axial an einem, beispielsweise als ringförmiger Deckel ausgestalteten, Körper 34 abstützen. Ein Eindringen von äußeren Verschmutzungen in das Wälzlager 18 kann durch eine beispielsweise als Kassettendichtung ausgestaltete Dichteinrichtung vermieden werden, die an dem axialen Außenrand des Wälzlagers 18 zwischen dem Innenring und dem Außenring angeordnet ist.

Der Körper 34 kann in dem dargestellten Ausführungsbeispiel direkt oder indirekt mit dem als Außenring ausgestalteten zweiten Ring 20 fest verbunden sein. Zwischen dem Körper 34 und dem relativ verdrehbaren ersten Ring 14 ist ein Ringspalt 24 ausgebildet, dessen Querschnitt prinzipiell groß genug sein kann, dass zumindest bei Drehmomentstößen und/oder plötzlichen Drehzahlwechseln Schmierfett aus dem Wälzlager 18 eindringen kann. Damit das Schmierfett nicht an die Dichtlippe 26 gelangt und bei den dort vorherrschenden Temperaturen und Drucken karbonisiert, ist eine Fettdichtung 36 vorgesehen, die das Schmierfett zurückhält. Die Fettdichtung 36 braucht nur fettdicht ausgestaltet zu sein, so dass eine luftdichte Abdichtung, wie sie zwischen der Dichtlippe 26 und der Dichtkontaktfläche 28 vorgesehen ist, nicht realisiert sein braucht.

In dem in Fig. 1 dargestellten Ausführungsbeispiel ist die Fettdichtung 36 durch das Material des elastomeren Haltekörpers 28 ausgebildet. Der Stützring 32 weist eine an dem Körper 34 flächig anliegende Stützscheibe 38 zur Abtragung eines von der Druckkammer 22 auf die Dichteinheit 12 aufgeprägten Drucks auf. Von der Stützscheibe 38 ist radial innerhalb eine zur Dichtlippe 26 hin abgekröpfte Haltescheibe 40 vorgesehen, die eine nach radial innen weisenden Mantelfläche 42 aufweist. In dem in Fig. 1 dargestellten Ausführungsbeispiel ist die eine berührende oder nicht berührende Fettdichtung 36 im Wesentlichen in einem mit der Mantelfläche 42 gemeinsamen Axialbereich bauraumsparend von dem Haltekörper 30 ausgebildet.

Bei dem in Fig. 2 dargestellten Ausführungsbeispiel ragt im Vergleich zu dem in Fig. 1 dargestellten Ausführungsbeispiel die von dem elastomeren Haltekörper30 ausgebildete Fettdichtung 36 über den von der Mantelfläche 42 überstrichenen Axialbereich zum Körper 34 hin hinaus, so dass die Fettdichtung 36 auch in einem Axialbereich zwischen der Haltescheibe 40 und dem Körper 34 außerhalb des Ringspalts 24 ausgebildet ist. Die Fettdichtung 36 kann hierbei eine berührende oder nicht berührende Dichtung im Bereich eines zwischen dem Ringspalt 24 und der Dichtkontaktfläche 28 vorgesehenen Freistich 44 ausbilden.

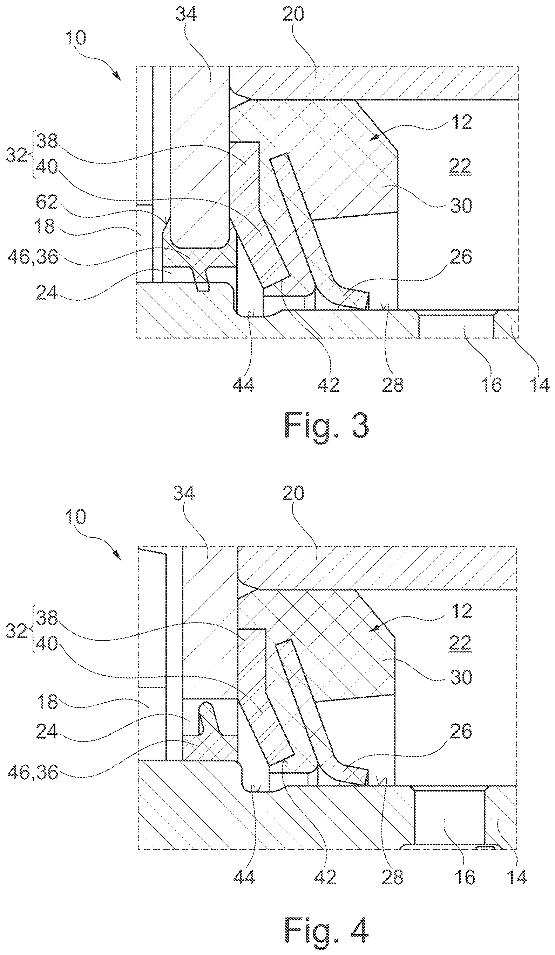

Bei dem in Fig. 3 dargestellten Ausführungsbeispiel ist im Vergleich zu den in Fig. 1 und Fig. 2 dargestellten Ausführungsbeispielen die Fettdichtung 36 nicht durch den Haltekörper 30, sondern einen separaten Dichtungskörper 46 ausgebildet. Der die Fettdichtung 36 ausbildende Dichtungskörper 46 ist innerhalb des kann sich über die gesamte axiale Erstreckung des Ringspalts 24 vorgesehen, um in dem Ringspalt 24 eine berührende oder berührungslose Dichtung auszubilden. In dem in Fig. 3 dargestellten Ausführungsbeispiel ist der Dichtungskörper 46 beispielsweise taschenartig mit dem Körper 34 verbunden und/oder in den Körper 34 eingepresst und kann über einen abstehenden Ansatz, beispielsweise eine Dichtlippe, den Öffnungsquerschnitt des Ringspalts 24 soweit verringern, dass aus dem Wälzlager 18 stammendes Schmierfett den Ringspalt 24 nicht mehr passieren kann. Die Fettdichtung 36 kann an der zum Wälzlager 18 weisenden Axialseite eine in radialer Richtung angeschrägte Rückseite 62 aufweisen, um von dem Wälzlager 18 kommendes Schmierfett nach radial außen von dem Ringspalt 24 wegzuleiten und über eine geeignete Formgestaltung des Körpers 34 zurück in das Wälzlager 18 fliehkraftgetrieben zu fördern. Alternativ kann der die Fettdichtung 36 ausbildende Dichtkörper auch mit dem erste Ring 14 verpresst sein, wie in Fig. 4 dargestellt ist.

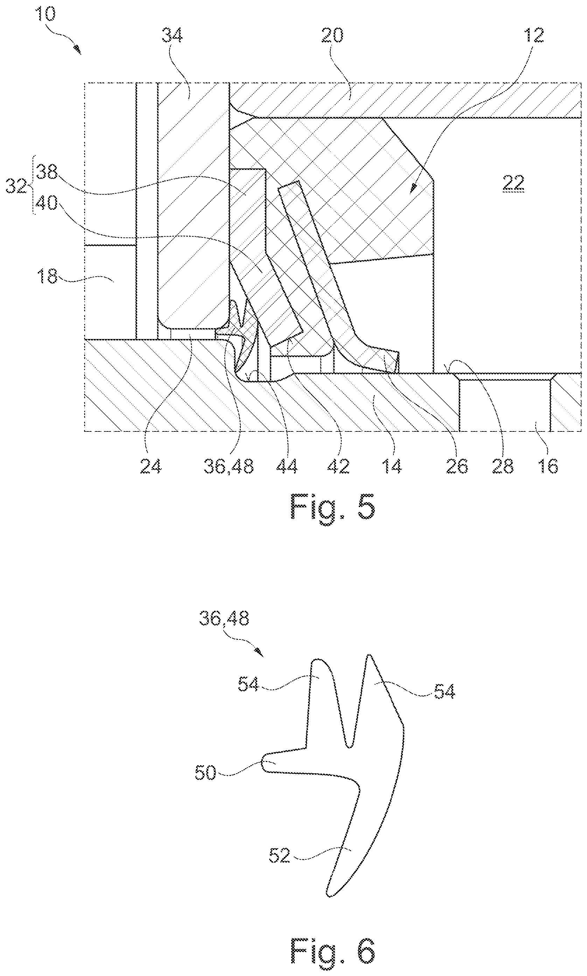

Bei dem in Fig. 5 dargestellten Ausführungsbeispiel ist im Vergleich zu dem in Fig. 3 und Fig. 4 dargestellten Ausführungsbeispiel die Fettdichtung 36 durch einen separaten Dichtkörper 48 ausgebildet, der außerhalb des Ringspalts 24 zwischen dem Körper 34 und der Haltescheibe 40 des Stützrings 32 verklemmt ist. Wie in Fig. 6 dargestellt ist, kann der Dichtkörper 48 einen in axialer Richtung, beispielsweise rohrförmig, abstehenden Zentrieransatz 50 aufweisen, über den der Dichtkörper 48 an dem Ringspalt 24 zentriert werden kann. Zudem kann der Dichtkörper 48 eine, insbesondere bis in den Freistich 44 hinein, abstehenden Dichtrippe 52 aufweisen, die radial innerhalb zu dem Ringspalt 24 eine berührende oder berührungslose Dichtung ausbildet. Die Dichtrippe 52 kann hierbei in axialer Richtung mit einer Stufe des ersten Rings 14 und/oder in radialer Richtung mit einer Außenseite des ersten Rings 14, insbesondere dem Freistich 44, zusammenwirken, um eine fettdichte Abdichtung auszubilden, die aber für Luft durchlässig sein kann. Im in Fig. 6 dargestellten Ausführungsbeispiel weist der Dichtkörper 48 nach radial außen abstehende Klemmrippen 54 auf, die zwischen dem Körper 34 und dem Stützring 32 in axialer Richtung elastisch verformt werden können, um den die Fettdichtung 36 ausbildenden Dichtkörper 48 spielfrei verklemmen zu können.

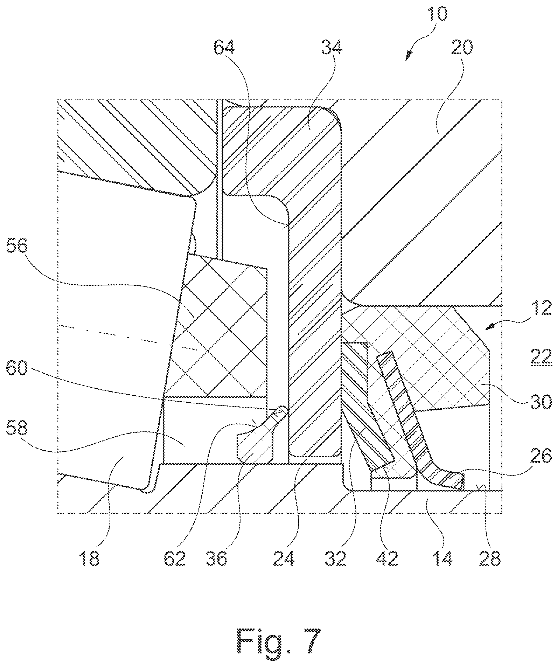

Bei dem in Fig. 7 dargestellten Ausführungsbeispiel des Radlagers 10 ist im Vergleich zu dem in Fig. 5 dargestellten Ausführungsbeispiel des Radlagers 10 die Fettdichtung 36 an der von der Druckkammer 22 wegweisenden und zum Wälzlager 18 hinweisenden Axialseite des, insbesondere im Querschnitt L-förmigen, Körpers 34 vorgesehen. Die Fettdichtung 36 kann hierbei in einen gemeinsamen Axialbereich mit einem Lagerkäfig 56 des Wälzlagers 18 nahezu bauraumneutral vorgesehen sein. Der Lagerkäfig 56 kann in radialer Richtung zu dem ersten Ring 14 weit genug beabstandet sein und einen Lagerspalt 58 ausbilden, der einen ausreichend großen Bauraum für die Fettdichtung 36 bereitstellen kann. Die Fettdichtung 36 kann zumindest teilweise in den Axialbereich des zwischen dem Lagerkäfig 58 und dem ersten Ring 14 ausgebildeten Lagerspalt 58 hineinragen. Die Fettdichtung 36 kann insbesondere als berührende oder nicht-berührende Ringdichtung ausgestaltet sein, die vorzugsweise auf dem ersten Ring 14 aufgepresst ist und gegebenenfalls eine zum Körper 34 weisende Dichtkante 60 aufweist. Vorzugsweise ist vorgesehen, dass der erste Ring 14 feststehend ist, während der zweite Ring 20 und der mit dem zweiten Ring 20 mitdrehende Körper 34 rotierend ausgestaltet sind. Aus dem Wälzlager 18 austretendes Schmierfett kann an der Fettdichtung 36 ankommen und an einer, vorzugsweise in radialer Richtung angeschrägten, Rückseite 62 der Fettdichtung 36 zu dem Körper 34 geführt werden. Durch die höhere Drehzahl der zweiten Rings 20 und des Körpers 34 im Vergleich zum ersten Ring 14 kann das an dem Körper 34 von der zwischen der Fettdichtung 36 und dem Körper 34 ausgebildeten Dichtstelle durch angreifende Fliehkräfte nach radial außen weggeschleudert werden, wodurch die Dichtwirkung verbessert ist. Insbesondere kann das nach radial außen weggeschleuderte Schmierfett aufgrund einer entsprechend angeschrägten und/oder gebogenen Axialkonturierung 64 des Körpers 34 an der zum Wälzlager 18 weisenden Axialseite zum Wälzlager 18 hin umgelenkt werden, so dass das nach radial außen weggeschleuderte Schmierfett radial außerhalb zum Lagerkäfig 56 wieder zurück ins Wälzlager 18 gelangen kann. Dadurch kann mit Hilfe der ableitenden Funktion der Fettdichtung 36 die Schmierwirkung des Wälzlagers 18 verbessert werden und ein Austrocknen des Wälzlagers 18 vermieden werden. Durch die beispielsweise im Wesentlichen L-förmige Axialkonturierung 64 des Körpers 34 kann der Lagerkäfig 56 des Wälzlagers 18 zumindest teilweise in den von dem Körper 34 eingenommenen Axialbereich außerhalb des Ringspalts 24 eintauchen, wodurch sich ein bauraumsparender und kompakter Aufbau ergibt, der zusätzlich eine gute Schmierung des Wälzlagers 18 und eine gute Dichtigkeit der Druckkammer 22 ermöglicht.

### Bezugszeichenliste

- 10: Radlager
- 12: Dichteinheit
- 14: erster Ring
- 16: Einlass
- 18: Wälzlager
- 20: zweiter Ring
- 22: Druckkammer
- 24: Ringspalt
- 26: Dichtlippe
- 28: Dichtkontaktfläche
- 30: Haltekörper
- 32: Stützring
- 34: Körper
- 36: Fettdichtung
- 38: Stützscheibe
- 40: Haltescheibe
- 42: Mantelfläche
- 44: Freistich
- 46: Dichtungskörper
- 48: Dichtkörper
- 50: Zentrieransatz
- 52: Dichtrippe
- 54: Klemmrippe
- 56: Lagerkäfig
- 58: Lagerspalt
- 60: Dichtkante
- 62: Rückseite
- 64: Axialkonturierung

## Patentansprüche

1. Radlager zur Lagerung eines Kraftfahrzeugreifens eines Kraftfahrzeugs, insbesondere Lastkraftfahrzeug, mit
einem, insbesondere als Innenlagerring ausgestalteten, ersten Ring (14),
einem, insbesondere als Außenlagerring oder Nabe oder Adapterring ausgestalteten, relativ zum ersten Ring (14) über mindestens ein gefettetes Wälzlager (18) drehbar gelagerten zweiten Ring (20),
einer in radialer Richtung zwischen dem ersten Ring (14) und dem zweiten Ring (20) ausgebildeten Druckkammer (22) zum Durchleiten von Druckluft durch den ersten Ring (14) und den zweiten Ring (20) hindurch und
einer in radialer Richtung zwischen dem ersten Ring (14) und dem zweiten Ring (20) und in axialer Richtung zwischen dem gefetteten Wälzlager (18) und der Druckkammer (22) angeordneten Dichteinheit (12) zum Abdichten der Druckkammer (36) gegenüber dem Wälzlager (18),
wobei die Dichteinheit (12)
eine die Druckkammer (22) axial zumindest teilweise begrenzende Dichtlippe (26) zur luftdichten Abdichtung der Druckkammer (22) und
mindestens eine zu der Dichtlippe (26) verschiedene Fettdichtung (36) zur fettdichten aber luftdurchlässigen Abdichtung eines zwischen dem ersten Ring (14) und dem zweiten Ring (20) ausgebildeten und zum Wälzlager (18) führenden Ringspalts (24)
aufweist, und wobei die Dichteinheit (12) einen aus einem, insbesondere elastomeren, Kunststoffmaterial herstellten und mit dem ersten Ring (14) oder mit dem zweiten Ring (20) verpressten Haltekörper (30) zur Befestigung der Dichtlippe (26) aufweist, **dadurch gekennzeichnet, dass** die Fettdichtung (36) durch den Haltekörper (30) ausgebildet ist.

2. Radlager nach Anspruch 1, **dadurch gekennzeichnet, dass** die Dichteinheit (12) einen, insbesondere aus einem Stahl hergestellten, Stützring (32) zur axialen Abtragung eines von der Druckkammer (22) auf die Dichteinheit (12) aufgeprägten Drucks an einen mit dem ersten Ring (14) oder mit dem zweiten Ring (20) verbundenen und den Ringspalt (24) in radialer Richtung begrenzenden Körper (34), insbesondere Dichtscheibe des Wälzlagers (18) und/oder Stützkörper, aufweist.

3. Radlager nach Anspruch 2 **dadurch gekennzeichnet, dass** die Fettdichtung (36) radial innerhalb des Stützrings (32) ausgebildet ist.

4. Radlager nach Anspruch 2 oder 3 **dadurch gekennzeichnet, dass** der Stützring (32) eine flächig an dem Körper (34) anliegende Stützscheibe (38) und eine von dem Körper (34) weg und zu der Dichtlippe (26) hin abgekröpfte Haltescheibe (40) aufweist, wobei die Haltescheibe (40) eine zu einem Großteil nach radial innen weisende Mantelfläche (42) aufweist.

5. Radlager nach einem der Ansprüche 1 bis 4 **dadurch gekennzeichnet, dass** die Fettdichtung (36) im Wesentlichen vollständig in einem gemeinsamen Axialbereich mit der Mantelfläche (42) der Haltescheibe (40) ausgebildet ist oder der Haltekörper (30) und/oder die Fettdichtung (36) die Mantelfläche (42) vollständig umgreift und von der Haltescheibe (40) zum Wälzlager (18) hin zumindest teilweise absteht.

6. Radlager nach einem der Ansprüche 1 bis 5 **dadurch gekennzeichnet, dass** die Fettdichtung (36) eine zum Wälzlager (18) hin weisende in radialer Richtung angeschrägte Rückseite (62) zum Ableiten von Schmierfett des Wälzlagers (18) nach radial außen von dem Ringspalt (24) weg aufweist, wobei insbesondere die Fettdichtung (36) teilweise radial innerhalb zu einem Lagerkäfig (56) des Wälzlagers (18) angeordnet ist und die Rückseite (62) ausgeformt ist das abgeleitete Schmierfett zur einer den Lagerkäfig (24) zumindest teilweise radial außen umgreifende Axialkonturierung (64) zu leiten.

## Claims

1. A wheel bearing for mounting a motor vehicle tyre of a motor vehicle, in particular a truck, having
a first ring (14), in particular designed as an inner bearing ring,
a second ring (20), in particular designed as an outer bearing ring or hub or adapter ring, which is rotatably mounted relative to the first ring (14) via at least one greased rolling bearing (18), a pressure chamber (22) formed in the radial direction between the first ring (14) and the second ring (20) for passing compressed air through the first ring (14) and the second ring (20), and
a sealing unit (12) arranged in the radial direction between the first ring (14) and the second ring (20) and in the axial direction between the greased rolling bearing (18) and the pressure chamber (22) for sealing the pressure chamber (36) with respect to the rolling bearing (18), wherein the sealing unit (12) has
a sealing lip (26) at least partially delimiting the pressure chamber (22) in the axial direction for airtight sealing of the pressure chamber (22) and
at least one grease seal (36) being different from the sealing lip (26) for a grease-tight but air-permeable seal of an annular gap (24) formed between the first ring (14) and the second ring (20) and leading to the rolling bearing (18)
and wherein the sealing unit (12) has a retaining body (30) made of a plastic material, in particular an elastomeric material, and pressed with the first ring (14) or with the second ring (20) for fastening the sealing lip (26),
**characterised in that** the grease seal (36) is formed by the retaining body (30).

2. The wheel bearing according to claim 1, **characterised in that** the sealing unit (12) has a support ring (32), in particular made of steel, for axially transferring a pressure imposed on the sealing unit (12) by the pressure chamber (22) to a body (34) connected to the first ring (14) or to the second ring (20) and limiting the annular gap (24) in the radial direction, in particular a sealing disc of the rolling bearing (18) and/or a support body.

3. The wheel bearing according to claim 2, **characterised in that** the grease seal (36) is formed radially inside the support ring (32).

4. The wheel bearing according to claim 2 or 3, **characterised in that** the support ring (32) has a support disc (38) lying flat against the body (34) and a retaining disc (40) that is bent away from the body (34) and towards the sealing lip (26), wherein the retaining disc (40) has a lateral surface (42) that extends radially inwards to a large extent.

5. The wheel bearing according to any one of claims 1 to 4, **characterised in that** the grease seal (36) is formed substantially completely in a common axial area with the lateral surface (42) of the retaining disc (40) or the retaining body (30) and/or the grease seal (36) completely surrounds the lateral surface (42) and at least partially projects from the retaining disc (40) towards the rolling bearing (18).

6. The wheel bearing according to any one of claims 1 to 5, **characterised in that** the grease seal (36) has a radially inclined rear side (62) facing towards the rolling bearing (18) for draining lubricating grease from the rolling bearing (18) radially outwards away from the annular gap (24), wherein in particular the grease seal (36) is arranged partially radially inside a bearing cage (56) of the rolling bearing (18) and the rear side (62) is shaped to direct the drained lubricating grease to an axial contour (64) that at least partially surrounds the bearing cage (24) radially outwards.

## Revendications

1. Roulement de roue pour le montage d'un pneumatique de véhicule à moteur d'un véhicule à moteur, en particulier d'un camion, comportant
une première bague (14), en particulier conçue en tant que bague de roulement intérieure, une seconde bague (20), en particulier conçue en tant que bague de roulement extérieure ou moyeu ou bague d'adaptateur, qui est montée rotative par rapport à la première bague (14) par l'intermédiaire d'au moins un roulement (18) graissé,
une chambre de pression (22) réalisée dans la direction radiale entre la première bague (14) et la seconde bague (20) pour le passage d'air sous pression à travers la première bague (14) et la seconde bague (20) et
une unité d'étanchéité (12) agencée dans la direction radiale entre la première bague (14) et la seconde bague (20) et dans la direction axiale entre le roulement (18) graissé et la chambre de pression (22) pour assurer l'étanchéité de la chambre de pression (36) par rapport au roulement (18),
l'unité d'étanchéité (12) présentant
une lèvre d'étanchéité (26) limitant axialement la chambre de pression (22) au moins partiellement pour assurer l'étanchéité à l'air de la chambre de pression (22) et
au moins un joint d'étanchéité à la graisse (36) différent de la lèvre d'étanchéité (26) pour assurer l'étanchéité à la graisse tout en étant perméable à l'air d'un espace annulaire (24) formé entre la première bague (14) et la seconde bague (20) et conduisant au roulement (18)
et l'unité d'étanchéité (12) présentant un corps de retenue (30) fabriqué en matière plastique, en particulier en matière élastomère, et pressé avec la première bague (14) ou avec la seconde bague (20) pour la fixation de la lèvre d'étanchéité (26),
**caractérisé en ce que** le joint d'étanchéité à la graisse (36) est réalisé par le corps de retenue (30).

2. Roulement de roue selon la revendication 1, **caractérisé en ce que** l'unité d'étanchéité (12) présente une bague de support (32), en particulier fabriquée en acier, pour le transfert axial d'une pression imposée à l'unité d'étanchéité (12) par la chambre de pression (22) à un corps (34) relié à la première bague (14) ou à la seconde bague (20) et limitant l'espace annulaire (24) dans la direction radiale, en particulier un disque d'étanchéité du roulement (18) et/ou un corps de support.

3. Roulement de roue selon la revendication 2 **caractérisé en ce que** le joint d'étanchéité à la graisse (36) est réalisé radialement à l'intérieur de la bague de support (32).

4. Roulement de roue selon la revendication 2 ou 3 **caractérisé en ce que** la bague de support (32) présente un disque de support (38) reposant à plat contre le corps (34) et un disque de retenue (40) qui est plié à l'écart du corps (34) et vers la lèvre d'étanchéité (26), le disque de retenue (40) présentant une surface d'enveloppe (42) qui s'étend radialement vers l'intérieur dans une large mesure.

5. Roulement de roue selon l'une des revendications 1 à 4, **caractérisé en ce que** le joint d'étanchéité à la graisse (36) est réalisé sensiblement entièrement dans une zone axiale commune avec la surface d'enveloppe (42) du disque de retenue (40) ou le corps de retenue (30) et/ou le joint d'étanchéité à la graisse (36) entoure complètement la surface d'enveloppe (42) et fait au moins partiellement saillie du disque de retenue (40) vers le roulement (18).

6. Roulement de roue selon l'une des revendications 1 à 5, **caractérisé en ce que** le joint d'étanchéité à la graisse (36) présente un côté arrière incliné radialement (62) pointant vers le roulement (18) pour l'évacuation de la graisse lubrifiante du roulement (18) radialement vers l'extérieur, loin de l'espace annulaire (24), en particulier le joint d'étanchéité à la graisse (36) étant agencé partiellement radialement à l'intérieur d'une cage de roulement (56) du roulement (18) et le côté arrière (62) est façonné pour diriger la graisse lubrifiante évacuée vers un contour axial (64) qui entoure au moins partiellement la cage de roulement (24) radialement vers l'extérieur.
